# EUROPEAN PATENT SPECIFICATION

(11) **EP 0 403 182 B1**
(45) Date of publication and mention of the grant of the patent: **25.01.1995**
(21) Application number: 90306284.2
(22) Date of filing: 08.06.1990
(51) Int. Cl.: C22C 1/04, B22F 3/26

(54) **Article of aluminium alloy locally having a composite portion**
Gegenstand mit einem Verbundbereich aus einer Aluminiumlegierung
Article à partir d'une alliage d'aluminium ayant une partie composée

(30) Priority: 12.06.1989 JP 149220/89
(43) Date of publication of application: 19.12.1990
(73) Proprietor: IZUMI INDUSTRIES, LTD., Kawagoe-shi, Saitama-ken (JP)
(72) Inventor: Suzuki, Yoshihiro, Kitaadachi-gun, Saitama-ken (JP); Ogiwara, Toshio, Gyoda-shi, Saitama-ken (JP); Kudo, Masaaki, Kumagaya-shi, Saitama-ken (JP)
(74) Representative: Price, Paul Anthony King

(56) References cited:
- DE-A- 3 418 405
- FR-A- 2 284 769
- US-A- 2 851 354

## Description

The invention relates to a method of manufacturing an article of aluminium alloy locally having a composite portion.

The invention has particular though not exclusive application to pistons made of aluminium alloy for internal combustion engines.

To improve the local mechanical strength of an aluminium alloy it has been proposed to include a composite portion, formed by penetrating aluminium alloy into a porous metal under a high pressure. This is disclosed, for example, in JP-B2-60-25619.

Moreover, to improve the wear resistance of an aluminium alloy, a layer, which is a chemical compound of the aluminium alloy and a porous metal made of iron, nickel, copper or the like, is disclosed in JP-A-59-213939, JP-A-59-218341 and JP-A-59-212159.

The applicant of this invention has discovered that, if chromium of more than 10% is added to a porous metal made of iron or nickel so as to prevent a reaction induced in the interface between the porous metal and an aluminium alloy, the mechanical strength and wear resistance of the aluminium alloy are greatly improved.

However, the mechanical strength of the interface is not much improved if the porosity of the porous metal becomes less than 40%.

Conventional production methods of porous metal can be classified generally into three groups as shown in Table 1 appended hereto. Various factors influence the tensile strength and the wear resistance of an article of aluminium alloy having a composite portion, e.g. the porosity of a porous metal forming the composite portion increases the tensile strength of the interface but decreases the wear resistance of the composite portion, as the porosity increases.

Thus, if a porous metal produced by a method of Group 1, the porosity of which is comparatively small, is used, and chromium is not added to the porous metal as mentioned above, a poor composite portion is often obtained due to small changes of the factors during the manufacturing process, and it becomes difficult to make use of the advantage that the wear resistance increases with a decrease of the porosity.

On the other hand, if porous metals produced by the methods of Groups 2 and 3, the porosities of which are comparatively large, are used, a poor composite portion is not formed, but it becomes difficult to improve the wear resistance of the aluminium alloy.

If chromium is cemented into the porous metal by diffusion, the wear resistance of the composite portion of the aluminium alloy is much improved. However, as the porosity of the porous metal becomes less than 40% the tensile strength of the composite portion is hardly improved, probably for the following reason.

As the porosity becomes less than 40%, the diameter of the pores in the porous metal becomes small, and penetration distances to the middle of the porous metal, where the molten aluminium alloy is to reach, become large, so that it is difficult for the melt to reach the middle of the porous metal during the manufacturing process. Thus, it is required to raise a temperature of the melt, or a preheating temperature of the porous metal, and as a result the reaction of the aluminium alloy with the porous metal becomes active on the outer periphery of the porous metal through which a large amount of melt flows.

According to the invention there is provided a method of manufacturing an article of aluminium alloy locally having a composite portion, the method comprising pressing a pair of surfaces of a porous metal member, the porosity of which is in a range of 85 to 98%, so as plastically to compress the porous metal member in a predetermined direction thereof; cementing chromium into the porous metal member by diffusion until the chromium content reaches a range of > 15 to 55% at the middle of the porous metal member; and forming the composite portion in the aluminium alloy article by penetrating molten aluminium alloy into the cemented porous metal member thereby locally to strengthen the aluminium alloy article.

The aluminium alloy article has a high strength at the interface between the aluminium alloy and the porous metal, and the porous metal makes a good composite portion with the aluminium alloy.

A reaction at the interface between the porous metal and the aluminium alloy can be avoided, and as a result the strength of the interface is not decreased.

In a preferred embodiment, a surface which is machined in the composite portion of the aluminium alloy article, and is perpendicular to the pair of surfaces of the porous metal member, may serve as a sliding surface which comes into sliding contact with another member, so as to improve the wear resistance of the aluminium alloy article.

The porous metal member can be pressed so that its pores may be deformed to a degree of more than 20%. The porous metal member can be made of iron or nickel.

Moreover, the aluminium alloy article having the composite portion may be a piston for an internal combustion engine. In that case, at least a piston-ring groove is formed in the composite portion, so that a pair of upper and lower surfaces of the piston-ring groove extend perpendicularly to the pair of pressed surfaces and radially of the piston.

A porous metal having a porosity of 85 to 98% is used, and therefore the volumetric ratio thereof falls within a range of 2 to 15%, so that the wear resistance increases not so much. A pair of surfaces of the porous metal are pressed so that the porous metal is plastically deformed under compression, and thereby the wear resistance is improved because the volumetric ratio of the porous metal serving as reinforcement increases.

Moreover, as the porous metal is pressed only in one direction, the dimension of the pores viewed in parallel with the pressed direction does not change, so that a good composite portion is obtained because the molten aluminium alloy penetrates into the porous metal to the same degree as before, but in a surface perpendicular to the pair of pressed surfaces, the apparent volumetric ratio increases more than the real volumetric ratio, so that the wear resistance is greatly increased.

In addition, chromium is cemented into the porous metal by diffusion so far that the chromium is included in a range of > 15 to 55% at the middle of the porous metal. The molten aluminium alloy easily penetrates into the porous metal, so that at the interface between the aluminium alloy and the outer periphery of the porous metal there is not caused a reaction of the type which is produced by the method of Group 1 of Table 1. Thus, the tensile strength of the interface is improved.

The invention is diagrammatically illustrated by way of example in the accompanying drawings, in which:-
Figure 1 is a front view of a test piece formed as an article of aluminium locally having a composite portion according to the invention;
Figure 2 is a graphical representation of compression rate against specific abrasion loss for the composite material of the test piece of Figure 1 (when the chromium content is within a range of 40 to 45%);
Figure 3 is a graphical representation of compression rate against tension strength for the composite material of the test piece of Figure 1 (wherein the chromium content is used as a parameter);
Figure 4A and 4B are explanatory drawings of pores of a porous metal;
Figure 5 is a graphical representation of chromium content against specific abrasion loss relationship of the composite material of the test piece of Figure 1; and
Figure 6A to 6D are explanatory drawings of a piston groove of an improved piston comprising an article of aluminium alloy locally having a composite portion according to the invention.

Referring to the drawings, an embodiment of the invention applied to a piston, for an internal combustion engine and made of aluminium alloy, will be hereinafter described.

Firstly, three plates 1 of porous metal made of nickel (manufactured by "Sumitomo-Denko" Co, Ltd. and identified by "Celmet") were rolled between rolls to obtain three kinds of rolled plates which were 4, 3 and 2mm in thickness, and 20, 40, and 60% in volumetric ratio, respectively. The porous metal had a volumetric ratio of 6.3% and a thickness of 5mm. Further, the pores of the porous metal had a diameter of 0.4mm.

Then, such rolled plates 1 were chromized by embedding them in a mixed powder of chromium and alumina, and after being tightly enclosed were heated for eight hours at a temperature of 1080°C in a hydrogen gas stream to cement 30 to 45 percent chromium into the rolled plates 1 by diffusion. Second rolled plates were chromised twice under the same conditions to cement 55 percent chromium. Third rolled plates were heated for four hours to cement 10 to 40 percent chromium.

After heating at a temperature of 400°C, the rolled plates were set in a metal mould, and molten aluminium alloy (JIS:AC8A) was poured into the metal mould. After the metal mould was tightly closed, the melt was pressed under a pressure of 800kgf/cm². Various test pieces 2 of composite material based upon the aluminium alloy AC8A were thereby obtained.

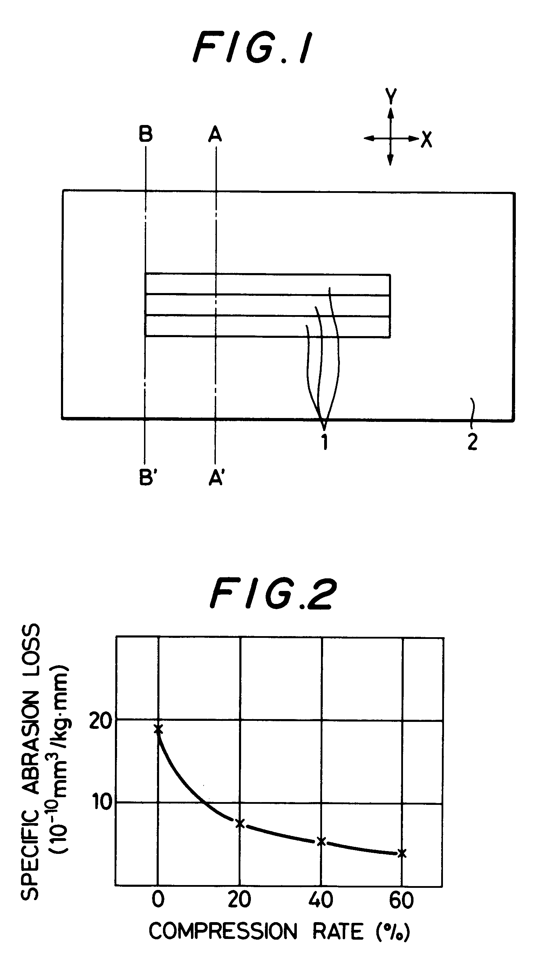

The test piece 2 shown in Figure 1 is one such and the composite material then received a solid solution treatment for five hours at a temperature of 500°C, and successively an ageing treatment for four hours at a temperature of 200°C (the so-called T6 treatment prescribed by JIS). In Figure 1, arrows X and Y denote directions for the test piece 2 being loaded under a tension test (hereinafter described), and for the porous metal being pressed, respectively.

Test pieces which contained chromium in a range of 40 to 45% were tested by an Ogoshi's abrasion tester to examine the wear resistance at section A-A′ in Figure 1, and the test result is graphically represented in Figure 2.

According to the test result shown in Figure 2, even when the compression rate is 20%, the value of specific abrasion loss is lower than that obtained when the compression rate is 0%. Further, the section A-A′ shown in Figure 1 was examined by dye check, and no defect was found in the composite portion of the aluminium alloy.

Tensile strengths of test pieces, the porous metal of which contained no chromium, and other test pieces having three kinds of compression rates, the porous metal of which contained chromium at 40%, were examined. Such test pieces were so designed as to rupture at section B-B′ of Figure 1.

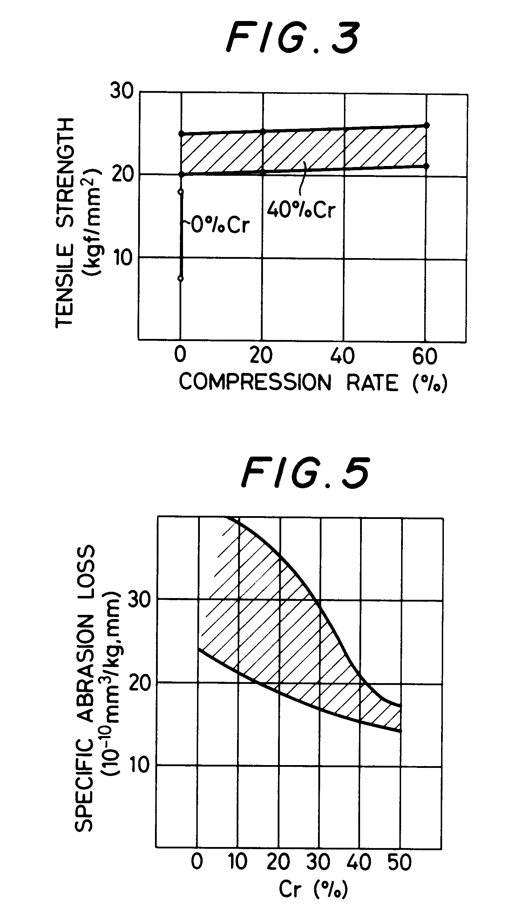

According to the test result shown in Figure 3, it is apparent that the tensile strength obtained when the test piece contained chromium was higher than that of the test piece which contained no chromium, and it seems that the above result derives from such a fact that the chromium prevents a reaction induced in the interface between the aluminium alloy AC8A and the porous metal "Celmet".

According to a result of similar tests which were made for test pieces comprising a porous metal which was obtained by means of sintering a powder of grain number 200, made of stainless steel (JIS:SUS316L), and which had a specific weight of 45% and a porosity of 53%, the maximum value and the mean value of the tensile strength were 18kgf/mm² and 12kgf/mm², respectively. Therefore, it is apparent that the tensile strength obtained by the test pieces which contained chromium at 40% was higher than that obtained by such test pieces.

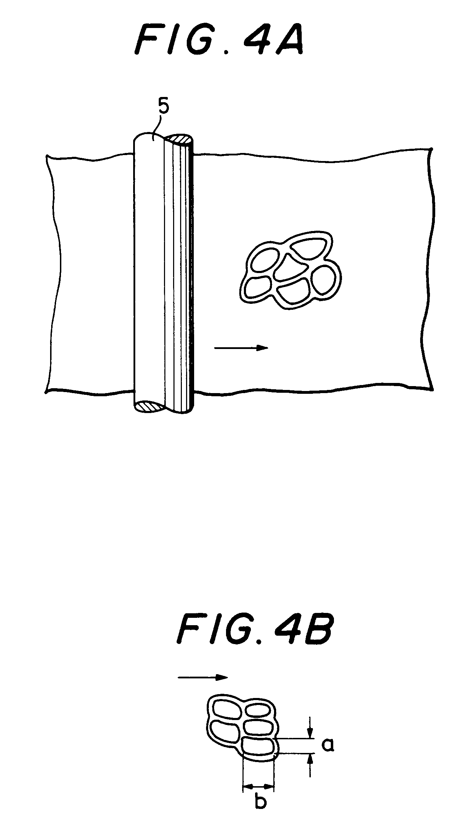

If a pair of surfaces of a porous metal which has a porosity of 85 to 98% are pressed as specified in claim 1, the configuration of pores in the porous metal, which is initially as illustrated in Figure 4A, hardly changes in a surface parallel to the pair of pressed surfaces, so that the molten aluminium alloy penetrates very smoothly into the porous metal due to the high porosity of the porous metal. However, in surfaces parallel to the rolled direction (denoted by an arrow in Figure 4A) and perpendicular to the pair of surfaces, the pores are elongated in the rolled direction but shortened in a compressed direction thereof as shown in Figure 4B, so that the wear resistance of the porous metal is improved due to an effect similar to an increase of the volumetric ratio of the porous metal.

If the lengths of the pore measured in the compressed direction and in the rolled direction are indicated a and b respectively, as shown in Figure 4B, the wear resistance is much improved in a surface in which (b/a) is more than 1.2. Though a surface perpendicular to the pair of surfaces and extending in a direction perpendicular to the rolled direction is not illustrated in the drawings, the same may be said of such surface.

As the porosity of the porous metal should be in a range of 85 to 98%, the porous metals obtained by the production methods of Groups 2 and 3 are available, and it is preferable that the porous metal is made of iron or nickel. If it is made of other metals, it becomes difficult to prevent the reaction induced in the interface due to existence of the chromium and, furthermore, to improve the wear resistance of the composite portion of the aluminium alloy.

To prevent the reaction induced in the interface, the chromium content exceeds 15%. The wear resistance becomes large as the chromium content increases, but, if the chromium content increases over 55%, the wear resistance is not improved so much. Further, the chromium should be cemented after the porous metal is rolled, lest the plastic working should be made difficult due to the existence of the chromium.

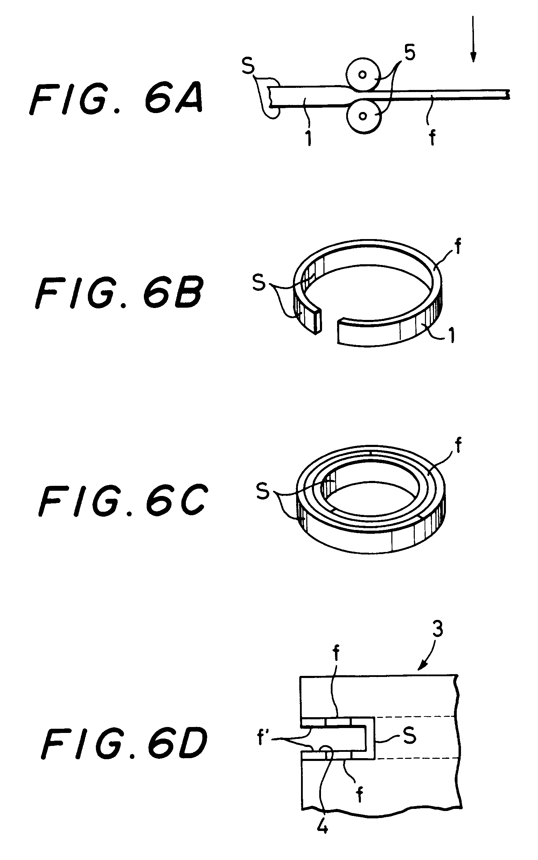

The wear resistance of a porous metal which has a volumetric ratio of 6.3% was examined by an Ogoshi's abrasion testing machine. According to the test result shown in Figure 5, the specific abrasion loss decreases as the chromium content increases. With reference to the test result, the distribution of the chromium was examined by a X-ray microanalyzer on a test piece which contained chromium at less than 30%, and it became apparent that the scatter of chromium content from the outer periphery to the middle of the porous metal was normally correlative with that of the specific abrasion loss. If the chromium percentage at the middle of the porous metal, and the mean value of the chromium content, were adjusted to be more than 20% and more than 30%, respectively, it could be accomplished to decrease the scatter of the specific abrasion loss.

Referring to Figures 6A to 6D, an embodiment in which the invention is applied to a piston of aluminium alloy for an internal combustion engine will be hereinafter described.

As shown in Figure 6A, a pair of surfaces s of a narrow plate 1 made of porous metal "Celmet" were pressed by rolls 5, and the plate 1 was formed into a ring as shown in Figure 6B, in which a pair of surfaces f perpendicular to the pair of surfaces s became the top and bottom ones of the annular plate 1, respectively.

Then, three of the annular plates 1 were superposed as shown in Figure 6C, and chromized. Thereafter, the annular plates 1 were set in a predetermined position within a metal mould, and a molten aluminium alloy was poured into the metal mould. After the metal mould was tightly closed, the melt was pressed under a predetermined high pressure to obtain a blank for a piston 3.

As shown in Figure 6D, when a piston ring groove 4 was machined within the annular plates 1, the upper and lower surfaces f′ of the piston ring groove 4, which are those which will be brought into sliding contact with a piston ring (not shown), corresponded to a pair of surfaces perpendicular to the pair of surfaces s, so that the wear resistance of the piston ring groove 4 was much improved.

If the invention is applied to a disc of a disc brake, made of aluminium alloy, the surface f of annular plates shown in Figure 6C should be designed to be exposed in the surface of the disc, which is to rub against the other disc of the disc brake.

Thus wear resistance of the composite portion of the aluminium alloy can be improved without greatly increasing the volumetric ratio of the porous metal, so that it is prevented that the production cost rises due to increase of the volumetric ratio.

Moreover, even when a porous metal having a low volumetric ratio is used, it is possible to improve the wear resistance thereof if an anisotropy is given to the porous metal, so that the mechanical strength of the composite portion of the aluminium alloy can also be improved together with the wear resistance.

**Table 1**

| Production Methods of Porous Metal | | |
|---|---|---|
| Group | Method | Porosity (%) |
| 1 | Metallic powder is loosely filled, and then, sintered. | ≈ 20 to 58 |
| 2 | Metallic fibre is filled, and then, sintered. | ≈ 75 to 88 |
| 3 | A three dimensional network of synthetic resin is plated with metal, and then, the synthetic resin is removed. | ≈ 85 to 98 |

## Claims

1. A method of manufacturing an article of aluminium alloy locally having a composite portion, the method comprising pressing a pair of surfaces (s) of a porous metal member (1), the porosity of which is in a range of 85 to 98%, so as plastically to compress the porous metal member (1) in a predetermined direction thereof; cementing chromium into the porous metal member (1) by diffusion until the chromium content reaches a range of > 15 to 55% at the middle of the porous metal member (1); and forming the composite portion in the aluminium alloy article (3) by penetrating molten aluminium alloy into the cemented porous metal member (1) thereby locally to strengthen the aluminium alloy article (3).

2. A method according to claim 1, in which a surface (f') which is machined in the composite portion of the aluminium alloy article(3), and is perpendicular to said pair of surfaces (s) of the porous metal member (1), serves as a sliding surface for coming into contact with a sliding surface of another member.

3. A method according to claim 1 or 2, in which the pores of the porous metal member (1) are deformed to a degree of more than 20% by the pressing of said pair of surfaces(s).

4. A method according to any of claims 1 to 3, in which the porous metal member (1) is made of iron or nickel.

5. A method according to claim 2, wherein the aluminium alloy article (3) is a piston (3) for an internal combustion engine, and the composite portion strengthens at least the top piston-ring groove (4) of the piston (3), the composite portion having two surfaces (f') which are machined in the porous metal and extend perpendicularly to said pair of pressed surfaces (s) and radially of the piston in order to serve as a pair of upper and lower surfaces (f') of the piston-ring groove (4).

## Patentansprüche

1. Verfahren zur Herstellung eines Gegenstandes einer Aluminiumlegierung örtlich mit einem Verbundbereich, bei dem man ein Paar Oberflächen (s) eines porösen Metallteils (1), dessen Porosität im Bereich von 85 bis 98 % liegt, derart preßt, daß das poröse Metallteil (1) in einer vorbestimmten Richtung desselben plastisch komprimiert wird, Chrom in das poröse Metallteil (1) durch Diffusion zementiert, bis der Chromgehalt einen Bereich von >15 bis 55 % bei der Mitte des porösen Metallteils (1) erreicht, und den Verbundbereich in dem Aluminiumlegierungsgegenstand (3) ausbildet, indem man geschmolzene Aluminiumlegierung in das zementiere poröse Metallteil (1) eindringen läßt und dabei den Aluminiumlegierungsgegenstand (3) örtlich verfestigt.

2. Verfahren nach Anspruch 1, bei dem eine Oberfläche (f'), die in dem Verbundbereich des Aluminiumlegierungsgegenstandes (3) maschinell bearbeitet ist und senkrecht zu dem Paar von Oberflächen (s) des porösen Metallteiles (1) ist, als eine Gleitfläche dient, um in Berührung mit einer Gleitfläche eines anderen Teils zu kommen.

3. Verfahren nach Anspruch 1 oder 2, bei dem die Poren des porösen Metallteils (1) in einem Umfang von mehr als 20 % durch das Pressen des Oberflächenpaares (s) verformt werden.

4. Verfahren nach einem der Ansprüche 1 bis 3, bei dem das poröse Metallteil (1) aus Eisen oder Nickel besteht.

5. Verfahren nach Anspruch 2, bei dem der Aluminiumlegierungsgegenstand (3) ein Kolben (3) für einen Verbrennungsmotor ist und der Verbundbereich wenigstens die obere Kolbenringnut (4) des Kolbens (3) verfestigt, wobei der Verbundbereich zwei Oberflächen (f') hat, die in dem porösen Metall maschinell bearbeitet sind und sich senkrecht zu dem Paar gepreßter Oberflächen (s) und radial zu dem Kolben erstrecken, um als ein Paar oberer und unterer Oberflächen (f') der Kolbenringnut (4) zu dienen.

## Revendications

1. Procédé de fabrication d'un article en alliage d'aluminium ayant localement une partie composite, le procédé comportant la compression d'une paire de surfaces (s) d'un élément métallique poreux (1), dont la porosité est dans une plage de 85 à 98%_{,} de façon à comprimer plastiquement l'élément métallique poreux (1) dans une direction prédéterminée de celui-ci; la cémentation du chrome dans l'élément métallique poreux (1) par diffusion jusqu'à ce que la teneur en chrome atteigne une plage de >15 à 55% au milieu de l'élément métallique poreux (1); et la formation de la partie composite dans l'article en alliage d'aluminium (3) en faisant pénétrer l'alliage d'aluminium fondu dans l'élément métallique poreux cémenté (1) afin de renforcer ainsi localement l'article en alliage d'aluminium (3).

2. Procédé selon la revendication 1, dans lequel une surface (f') qui est usinée dans la partie composite de l'article en alliage d'aluminium (3), et est perpendiculaire à ladite paire de surfaces (s) de l'élément métallique poreux (1), sert de surface de glissement destinée à venir en contact avec une surface de glissement d'un autre élément.

3. Procédé selon la revendication 1 ou 2, dans lequel les pores de l'élément métallique poreux (1) sont déformés à un degré supérieur à 20% par compression de ladite paire de surfaces (s).

4. Procédé selon l'une quelconque des revendications 1 à 3, dans lequel l'élément métallique poreux (1) est en fer ou en nickel.

5. Procédé selon la revendication 2, dans lequel l'article en alliage d'aluminium (3) est un piston (3) pour un moteur à combustion interne, et la partie composite renforce au moins la gorge de segment de piston supérieure (4) du piston (3), la partie composite ayant deux surfaces (f') qui sont usinées dans le métal poreux et s'étendent perpendiculairement à ladite paire de surfaces comprimées (s) et radialement par rapport au piston afin de servir de paire de surfaces supérieure et inférieure (f') de la gorge de segment de piston (4).
